# EUROPEAN PATENT SPECIFICATION

(11) **EP 0 739 806 B1**
(45) Date of publication and mention of the grant of the patent: **28.11.2001**
(21) Application number: 96106756.8
(22) Date of filing: 29.04.1996
(51) Int. Cl.: B62D 1/19, B62D 1/16, F16D 3/06

(54) **Vehicle steering column with axially slidable coupling**
Fahrzeuglenksäule mit axialer Gleitkupplung
Colonne de direction de véhicule avec embrayage à glissement axial

(30) Priority: 28.04.1995 JP 10512695
(43) Date of publication of application: 30.10.1996
(73) Proprietor: Fuji Kiko Co., Ltd., Tokyo 103 (JP)
(72) Inventor: Michihata, Shigeki, Kosai-shi, Shizuoka 431-04 (JP); Kurita, Haruhide, Kosai-shi, Shizuoka 431-04 (JP); Kinoshita, Satoshi, Kosai-shi, Shizuoka 431-04 (JP)
(74) Representative: Grünecker, Kinkeldey, Stockmair & Schwanhäusser Anwaltssozietät

(56) References cited:
- FR-A- 2 149 144

## Description

The present invention refers to a vehicle steering column having the features contained in the preamble portion of new claim 1. Furthermore, the present invention refers to a vehicle steering column having the features of the preamble portion of new independent claim 15.

Such a vehicle steering column is known from FR-A-2149144. This known vehicle steering column can transmit undesired vibrations because the edge of the element can come into direct contact with the inner shaft.

It is an object of the invention to provide a vehicle steering column which does not transmit perceptible vibrations while providing high torque capability and a high resistance to relative axial movement of the two portions of the steering column toward one another.

Said object is achieved according to the invention by a vehicle steering column having the features of claim 1 and a vehicle steering column having the features of independent claim 15.

Further improvements and embodiments of the invention are indicated in the subclaims.

The invention will now be described by way of example and with reference to the accompanying drawings:
Figs. 1A, 1B, 1C and 1D, when combined at lines A-A, B-B, C-C and D-D, show a fragmentary view of a vehicle steering system including a steering column with an upper half thereof broken to show partly a section of a coupling taken through the line 1-1 shown in Fig. 6;;
Figs. 2A, 2B and 2C, when combined at lines E-E and F-F, show a top plan view of the steering column;
Fig. 3 is a cross section taken through the line 3-3 of the steering column shown in Fig. 1B;
Fig. 4 is a cross section taken through the line 4-4 of the steering column shown in Fig. 1B;
Fig. 5 is a cross section taken through the line 5-5 of the steering column shown in Fig. 1B;
Fig. 6 is a cross section taken through the line 6-6 of the steering column shown in Fig. 1B;
Fig. 7 is a cross section taken through the line 7-7 of the steering column shown in Fig. 1B;
Fig. 8 is a fragmentary view of a vehicle steering system including a steering column with an upper half thereof broken to show an alternative coupling;
Fig. 9 is a top plan view of the steering column of Fig. 8 partly broken to show the coupling;
Fig. 10 is a cross section taken through the line 10-10 in Fig. 9;
Fig. 11 is a perspective view of a two-piece type collar used in the coupling shown in Figs. 8 and 9;
Fig. 12 is a perspective view of a one-piece type collar which may be used in the coupling shown in Figs. 8 and 9;
Fig. 13 is a perspective view of a sliding member in the form of a two-piece type collar used in the coupling shown in Figs. 8 and 9;
Fig. 14 is a perspective view of a sliding member in the form of a one-piece type collar which may be used in the coupling shown in Figs. 8 and 9;

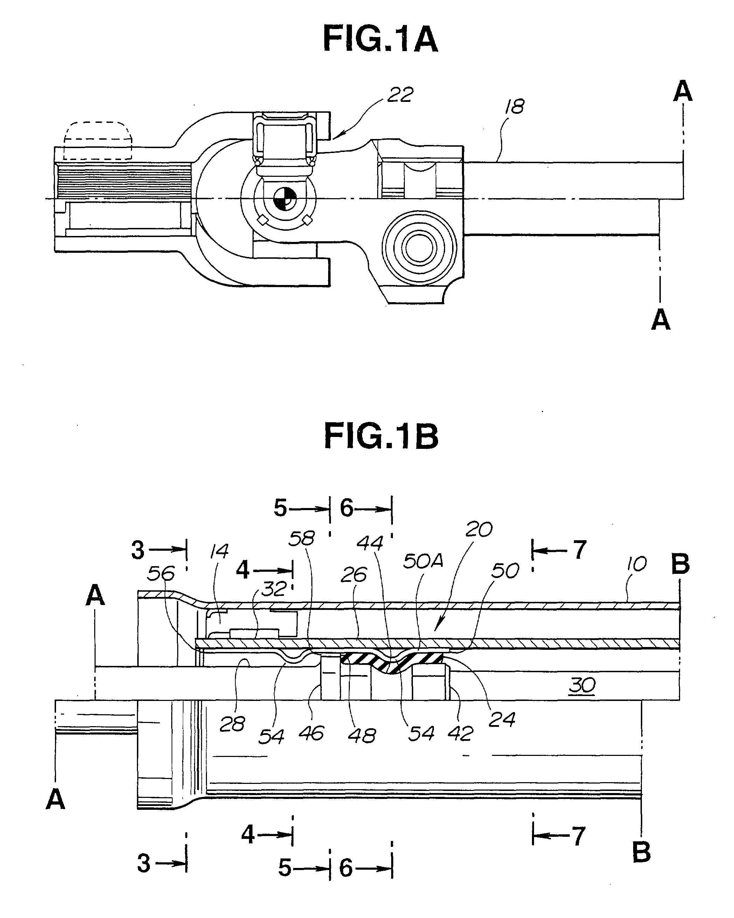

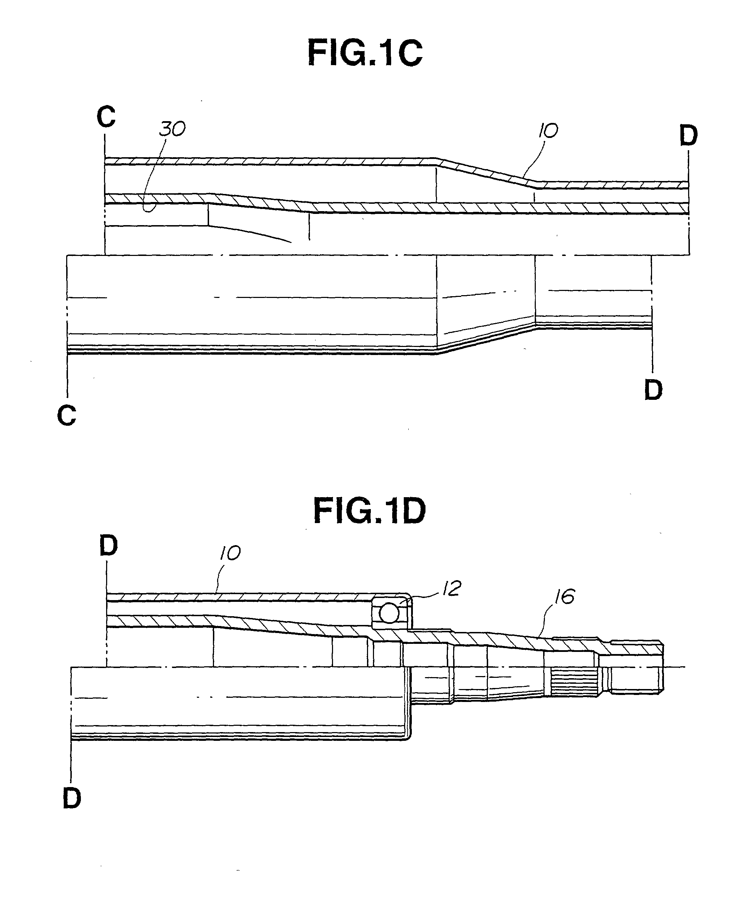

Referring to Figs. 1A, 1B, 1C and 1D, the steering column is rotatably carried within a jacket tube 10 at an upper mounting point 12 and a lower mounting point 14. The steering column includes an upper steering shaft 16 forming one major portion thereof and a lower steering shaft 18 forming a second major portion thereof and a coupling 20. A steering wheel, not shown, is attached to the upper steering shaft 16. A universal joint 22 is shown attached to the lower steering shaft 18.

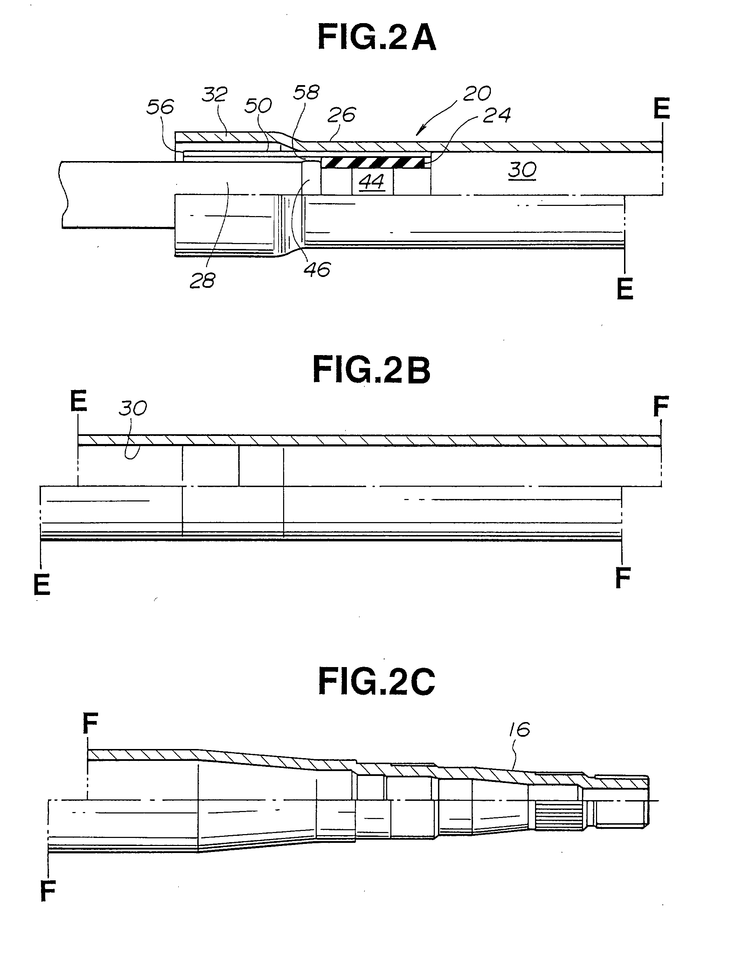

Figs. 1B and 2A show how the coupling 20 between the steering column portions 16 and 18 incorporates a resilient member 24 in the form of a rubber socket disposed between two relatively slidable coupling parts 26 and 28 to inhibit transmission of vibration through the steering column and to provide torque transmission therethrough.

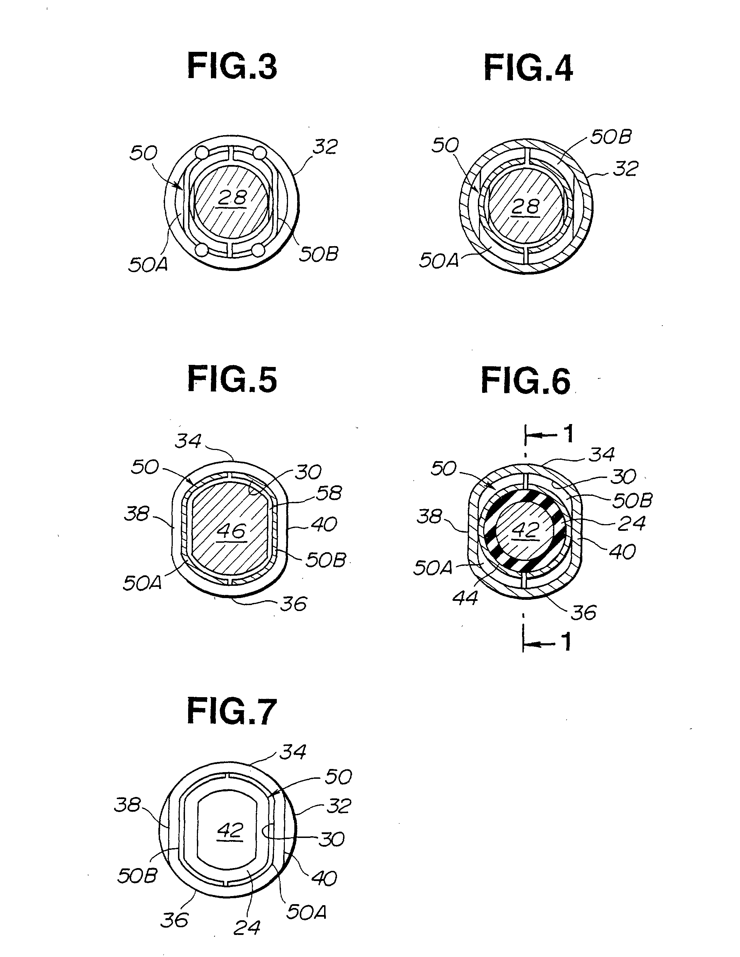

Referring also to Figs. 3 to 7, the coupling parts are in the form of an outer tube 26 and a co-axial inner shaft 28, respectively. The outer tube 26 defines a bore 30 with a non-circular or more specifically a double-D cross section. This bore 30 slidably receives the inner shaft 28 and extends axially over a length long enough to allow a required stroke of telescopic motion of the inner shaft 28 to yield a desired impact absorbing performance of the steering columnn. In this embodiment, the outer tube 26 forms an integral part of the upper steering shaft 16 and the outer wall of the outer tube 26 is cylindrical at an end portion 32 to mate with bearing at the lower mounting point 14 (see Figs. 2A, 3 and 4). As readily seen from Figs. 5, 6 and 7, at a portion where the bore 30 is defined, the outer wall of the outer tube 26 includes two spaced cylindrical wall sections 34 and 36 interconnected by two laterally spaced flat wall sections 38 and 40.

The inner shaft 28, which forms an integral part of the lower steering shaft 18 in this embodiment, has a piston 42 disposed in the bore 30. The piston 42 has a non-circular or double-D cross section of a cross sectional profile similar to a cross sectional profile of the bore 30. The piston 42 is recessed at a portion intermediate two axially spaced ends thereof to define a circumferential recessed wall or groove 44 having a circular cross section as shown in Fig. 6. The inner shaft 28 has an integral intermediate member 46 adjacent the piston 32. The intermediate member 46 is also of a non-circular or double-D cross section and defines a shoulder 48. The intermediate member 46 is also disposed in the bore 30.

The resilient member 24 surrounds and fixed to the piston 42 in abutting relation to the shoulder 48 of the intermediate member 46. The resilient member 24 can be fixed to the piston 42 by a portion thereof press fit into the recessed wall 44 or it can be bonded to the piston 42. The thickness of the resilient member 24 around the piston 42 before the piston 42 is inserted into the bore 30 is greater than the height of a space defined between the piston 42 and the inner wall defining the bore 30 when the upper and lower steering shafts 16 and 18 are aligned.

The coupling 20 includes a sliding member 50 fitted between the resilient member 24 and the inner wall defining the bore 30. The sliding member 50 surrounds and fits about the resilient member 24 and it has a cross section matching that of the bore 30 and has a close fit in the bore 30. The sliding member 50 is in the form of a two-piece type collar dividable by an axially extending plane into two halves 50A and 50B (see Figs. 3 to 7) or it may be in the form of a one-piece type collar. The sliding member 50 extends over and around the perimeter of intermediate member 46 and has two axially spaced inward projections 52 and 54. The inward projection 52 is positioned around the recessed wall 44 of the piston 42 to flex a portion of the resilient member 24 into firm engagement with the recessed wall 44, as best seen in Fig. 6. This arrangement provides unitary movement of the sliding member 50 with movement of the piston 42 during axial telescopic movement of the inner shaft 28 into the outer tube 26. The sliding member 50 is formed from a sheet of metal in this embodiment although it may be formed of a plastic material.

The other inward projection 54 is located on the opposite side of the intermediate member 46 to the side where the piston 42 is located. This projection 54 is arranged to abut the intermediate member 46 to prevent removal of the inner shaft 28 from the outer tube 26. Both of these inward projections 52 and 54 are formed by deforming the corresponding portions of the sliding member 50 inwardly as best seen in Figs. 6 and 4. Providing a stop against removal of the sliding member 50 from the outer tube 26, the outer tube 26 has one end projecting slightly beyond and crimped over an outer end 56 of the sliding member 50.

As shown in Figs. 1B and 5, the intermediate member 46 and the sliding member 50 define therebetween a space 58, around the circumference of the intermediate member 46, which allows angular motion of the outer tube 26 and the inner shaft 28 relative to one another within a predetermined limited range of angles. The intermediate member 46 comes into mechanical drive contact with the sliding member 50 to prevent angular motion of the outer tube 26 and the inner shaft 28 relative to one another beyond the predetermined range of angles. The space 58 is kept open by resilient bias owing to the resilient member 24 stressed or loaded between the sliding member 50 and the piston 42. Owing to this resilient bias of the resilient member 24, the sliding member 50 is held in engament with the inner wall defining the bore 30 in press fit manner, while the resilient member 24 is held firm engagement with the recessed wall 44 and thus in fixed relation to the piston 42.

Transmission of torque or rotational drive through the steering column is taken through these items with the safety aspect being covered by the mechanical drive of the intermediate member 46 of the inner shaft 28 and the sliding member 50 press fitted in the bore 30, with the double-D cross section, of the outer tube 26. This safety arrangement protects the resilient member 24.

In normal use, there is no axial movement between the sliding member 50 and the outer tube 26 in slidable fashion owing mainly to firm engagement of the sliding member 50 into the inner wall defining the bore 30. This arrangement resists relative axial movement of the two portions 16 and 18 of the steering column toward one another.

When a force tending to move the two portions 16 and 18 of the steering column toward one another exceeds a predetermined value during, for example, front end collision of the vehicle, the sliding member 50 moves together with the resilient member 24 and the piston 42 of the inner shaft 28 to slide on the inner wall defining the bore 30 of the outer tube 26, thus allowing telescopic movement of the inner shaft 28 relative to the outer tube 26.

The first embodiment described above includes the sliding member 50 fitted about the resilient member 24 which is fixed relative to the inner shaft 28 to allow slidable movement of the sliding member 50 on the outer tube 26 during telescipic axial movement of the inner shaft 28 into the outer tube 26. In the second and third embodiments described hereinafter, a sliding member is surrounded by a resilient member which is held in fixed relation with an outer tube and fits about an inner shaft to allow slidable movement of this sliding member on the inner shaft during telescopic axial movement of the inner shaft into the outer tube.

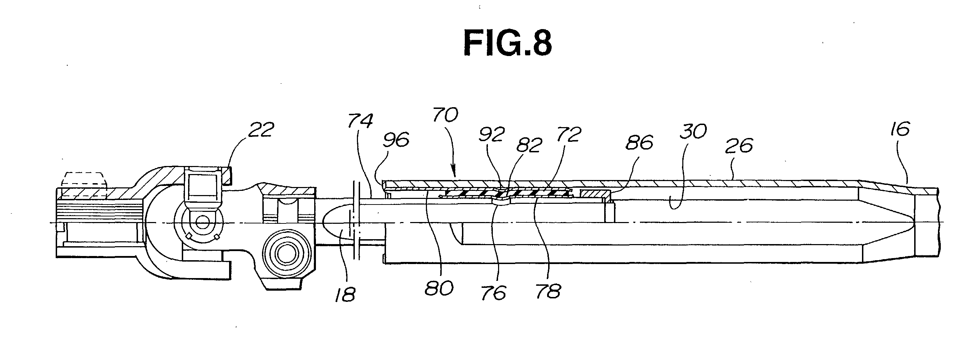

Referring to Figs. 8 to 9, the second embodiment incorporates substantially the same outer tube as the outer tube 26 used in the first embodiment. Thus, the same references as used in the first embodiment are used to denote the outer tube and the corresponding parts or portions of the outer tube for brevity of description.

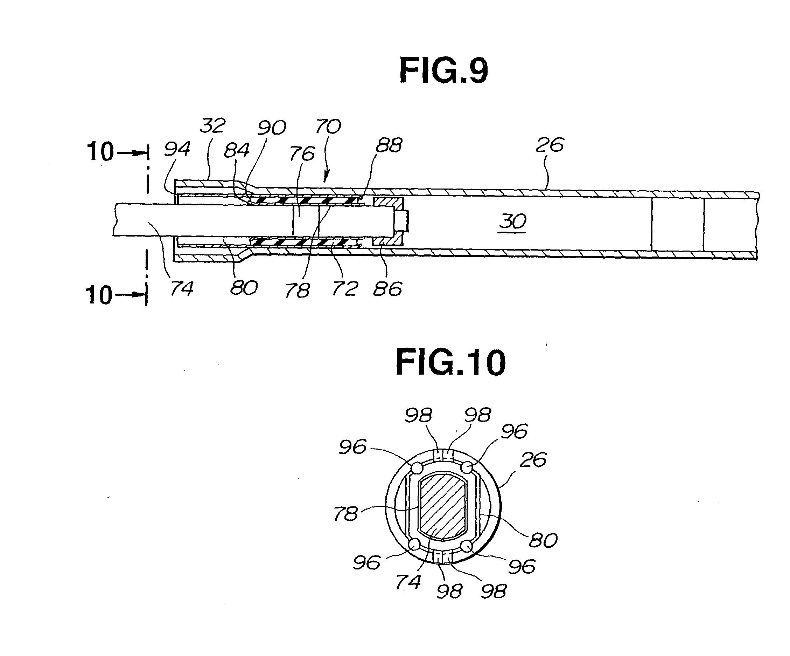

As shown in Figs. 8 and 9, a steering column includes a coupling 70. The coupling incorporates a resilient member 72 in the form of a rubber socket disposed between two relatively slidable coupling parts, namely the outer tube 26 and a co-axial inner shaft 74. As different from its counterpart of the first embodiment, the inner shaft 74 does not have a portion corresponding to the piston 42 and has a uniform non-circular or more specifically double-D cross section over its entire length. The inner shaft is recessed to define recessed wall 76. The resilient member 72 is substantially the same as its counterpart in the first embodiment.

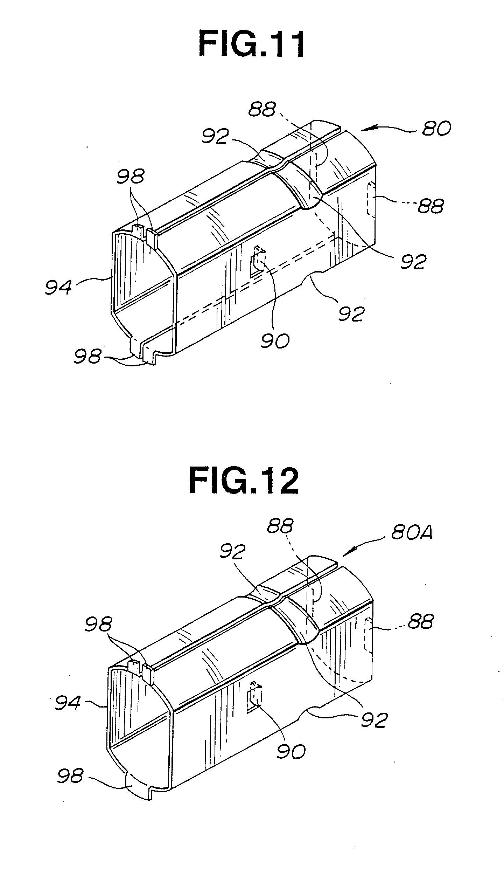

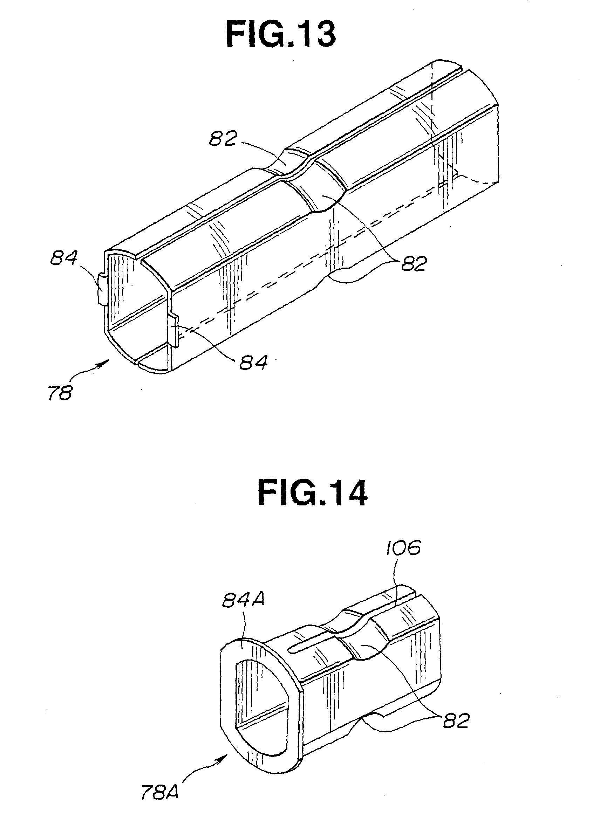

The coupling 70 includes a sliding member 78 in the form of a two-piece type inner collar as shown in Fig. 13 and a two-piece type outer collar 80 as shown in Pig. 11. The sliding member 78 is deformed inwardly at its cylindrical wall portions to define inward projections 82 which engage into the recessed walls 76, only one being shown in Fig. 8. At outer axial end, the sliding member 78 is formed with laterally extending ears 84. In assembly, the resilient member 72 fits about the sliding member 78 in abutting relation to the laterally extending ears 84, then the inner shaft 74 is inserted through the sliding member 78, and then an intermediate member 86 in the form of a cap is fixedly coupled with the inner shaft 74 at a leading end thereof (see Figs. 8 and 9). The intermediate member 86 is substantially the same in function with that of its counterpart 46 in the first embodiment. After fitting the resilient member 72 about the sliding member 78 on the inner shaft 74, the two halves of the outer collar 80 fit about the outer circumference of the resilient member 72 in a manner of interposing therebetween the resilient member 72. Providing correct positioning of the resilient member 72, each of the halves of the outer collar 80 is formed with axially spaced inward projections 88 and 90 between which the resilient member 72 is positioned. The outer collar 80 has a press fit in a bore 30 of the outer tube 25 and is formed with portions 92 deformed radially inwardly to flex the resilient member into the inwardly deformed portions 82 of the sliding member 78. As best seen in Fig. 10, the outer tube 26 extends slightly beyond and crimped over an outer end 94 of the outer collar 80 at four portions 96. The outer end 94 of the outer collar 80 projects slightly beyond and crimped over the one end of the outer tube 26 at portions 98 (see Figs. 8 and 12) In this manner the outer collar 80 is held in fixed relation to the outer tube 26. Owing to the resilient bias of the resilient member 72 stressed or comparssed between the sliding member 78 and the outer collar 80, the inward projections 82 is held in engagement with the recessed walls 76 of the inner shaft 74. In normal use of the steering column, this arrangement prevents relative axial movement between the inner shaft 74 and the outer tube 26.

If desired, the resilient member 72 may be bonded to the sliding member 78 and the outer collar 80 before assembly with the outer tube 26.

The intermediate member 86 and the inner wall defining the bore 30 of the outer tube 26 define therenetween a space which allows angular motion of the outer tube 26 and the inner shaft 74 relative to another within the predetermined limited range of angles. The intermediate member 86 comes into mechanical drive contact with the inner wall of the outer tube 26 to prevent angular motion of the outer tube 26 and the inner shaft 74 relative to one another beyond the predetermined limited range of angles.

When a force tending to move the two portions of the steering column toward one another exceeds a predetermined value, the inward projections 82 of the sliding member 78 disengages from the recessed walls 76 to allow the sliding member 78 to slide on the inner shaft 74 thereby to allow axial telescipic movement of the inner shaft 74 into the outer tube 26.

Fig. 12 shows a one-piece version of an outer collar. This modified outer collar is designated by the reference numeral 80A. Fig. 14 shows a one-piece version of inner collar serving as the sliding member. This version is denoted by the reference numeral 14A. As diffrence from the sliding member 74, the sliding member 78A is formed with an axial slit 104 and incorporates a flange 84A instead of laterally extending ears 84 (see Fig. 13).

As readily seen from Figs. 8 and 9, accidental removal of the inner shaft 74 from the sliding member 78 is prevented by abutting engagement of the intermediate member 86 with the outer collar 80.

## Claims

1. A vehicle steering column including a coupling (20) between two portions (16, 18) of the steering column, which coupling (20) incorporates two coupling parts (26, 28) being relatively slideable to each other, a sliding member (50) in contact with one of said two coupling parts (26, 28) and a resilient member (24) disposed between said sliding member (50) and the other of said coupling parts (26, 28) to bias said sliding member (50) into engagement with said one of said two coupling parts (26, 28), wherein a recess is formed in said other coupling part,
**characterized in that**
the sliding member (50) has a portion (52) deformed inwardly toward said other coupling part wherein said portion (52) flexes the resilient member (24) into said recess (44).

2. Vehicle steering column according to claim 1, **characterized in that** the two coupling parts (26, 28) are in the form of an outer tube (26) defining a bore (30) with a non-circular cross-section and a co-axial inner shaft (28), respectively, said inner shaft (28) being slidably arranged in the bore (30) of the outer tube (26).

3. Vehicle steering column according to claim 2, **characterized in that** the resilient member (24) is disposed around the inner shaft (28) and the outer tube (26) is disposed around the resilient member (24).

4. Vehicle steering column according to claim 3, **characterized in that** the sliding member (50) fits in said bore (30) of said outer tube (26) and about said resilient member (24) which is fixed to said inner shaft (28) and stressed between said sliding member (50) and said inner shaft (28) to bias the sliding member (50) into engagement with the outer tube (26).

5. Vehicle steering column according to claim 4, **characterized in that** the inner shaft (28) has a piston (42) disposed in said bore (30) said piston (42) having a non-circular cross-sectional profile similar to a cross-sectional profile of the bore (30) of the outer tube (26).

6. Vehicle steering column according to claim 5, **characterized in that** the recess is formed in the piston (42) of the inner shaft (28).

7. Vehicle steering column according to claim 6, **characterized in that** the inner shaft (28) has an intermediate member (46) adjacent said piston (42) and disposed in the bore (30) wherein said intermediate member (46) defines a shoulder.

8. Vehicle steering column according to claim 7, **characterized in that** the resilient member (24) surrounds the piston (42).

9. Vehicle steering column according to claim 8, **characterized in that** the resilient member (24) is interposed between the sliding member (50) and the piston (42) in abutting relation to the shoulder of said intermediate member (46).

10. Vehicle steering column according to claim 9, **characterized in that** said sliding member (50) extends over and around said intermediate member (46).

11. Vehicle steering column according to claim 10, **characterized in that** said intermediate member (46) and said sliding member (50) define therebetween a space (58) around said intermediate member (46), which allows angular motion of said outer tube (26) and said inner shaft (28) relative to one another within a predetermined limited range of angles.

12. A vehicle steering column according to claim 11, **characterized in that** said intermediate member (46) comes into mechanical contact with said sliding member (50) to prevent angular motion of said outer tube (26) and said inner shaft (28) relative to one another beyond said predetermined limited range of angles.

13. A vehicle steering column according to claim 12, **characterized in that** said sliding member (50) has an inner end adjacent said piston and an outer end, and said outer tube has one end projecting beyond and crimped over said outer end of said sliding member (50).

14. A vehicle steering column according to claim 13, **characterized in that** said sliding member (50) slides on said outer tube (26) to allow movement of said inner shaft (28) relative to said outer tube (26) when a force tending to move the two portions of the steering column toward one another exceeds a predetermined value.

15. A vehicle steering column including a coupling (70) between two portions (16, 18) of the steering column, which coupling (70) incorporates two coupling parts (26, 74) being relatively slidable to each other, a sliding element (78) in contact with one of said two coupling parts (26, 74) and a resilient member (72) associated to said sliding member (78), wherein a recess is formed in one of said two coupling parts (26, 74),
**characterized in that**
the sliding member (78) is in contact with one of said two coupling parts (26, 74) and has a portion (82) deformed inwardly into engagement with said recess, the resilient member (72) surrounds the sliding member (78) and a collar (80) is provided between the resilient member (72) and the other of the two coupling parts (74), wherein said collar (80) has a portion (92) deformed inwardly toward said one of the two coupling parts (26, 74) to flex the resilient member (72) into said inwardly deformed portion of said sliding member (78).

16. Vehicle steering column according to claim 15, **characterized in that** the two coupling parts (26, 74) are in the form of an outer tube (26) defining a bore (30) with a non-circular cross-section and a co-axial inner shaft (74), respectively, said inner shaft (74) being slidably arranged in the bore (30) of the outer tube (26).

17. Vehicle steering column according to claim 16, **characterized in that** a recess is formed in said inner shaft (74).

18. Vehicle steering column according to claim 17, **characterized in that** said inner shaft (74) has an intermediate member (86) at one end thereof.

19. Vehicle steering column according to any of claims 16 - 18, **characterized in that** said collar (80) has an outer axial end (94) and an inner axial end positioned inwardly into said bore (30) of said outer tube (26) further than said outer axial end thereof, and said outer axial end (94) of said collar (80) projects beyond and is crimped over one end of said outer tube (26).

20. Vehicle steering column according to any of claims 16 - 19, **characterized in that** said inwardly deformed portion (82) of said sliding member (78) disengages from said recess to allow movement of said inner shaft (74) relative to said outer tube (26) when a force tending to move the two portions (16, 18) of the steering column toward one another exceeds a predetermined value.

21. Vehicle steering column according to claim 18, **characterized in that** said intermediate member (86) and said outer tube (26) define therebetween a space which allows angular motion of said outer tube (26) and said inner shaft (74) relative to one another within a predetermined limited range of angles.

22. Vehicle steering column according to claim 21, **characterized in that** said intermediate member (86) comes into mechanical contact with said outer tube (26) to prevent angular motion of said outer tube (26) and said inner shaft (74) relative to one another beyond said predetermined limited range of angles.

23. Vehicle steering column according to any of claims 16 - 22, wherein said coupling (70) includes a collar fitting in said bore (30) of said outer tube (26), held in fixed relation to said outer tube (26) and surrounding said resilient member (72), and said sliding member (78) is anchored to said outer tube (26).

## Patentansprüche

1. Fahrzeuglenksäule mit einer Kupplung (20) zwischen zwei Abschnitten (16, 18) der Lenksäule, wobei die Kupplung (20) aus zwei Kupplungsteilen (26, 28), die relativ zueinander gleitfähig sind, einem Gleitteil (50), das in Kontakt mit einem der zwei Kupplungsteilen (26, 28) steht, und einem elastischen Teil (24) besteht, welches zwischen dem Gleitteil (50) und dem anderen der zwei Kupplungsteile (26, 28) liegt, um das Gleitteil (50) in dem Eingriff mit einem der zwei Kupplungsteile (26, 28) vorzuspannen, wobei in dem anderen Kupplungsteil eine Auskehlung ausgebildet ist,
**gekennzeichnet dadurch, dass**
das Gleitstück (50) einen Abschnitt (52) hat, der nach innen gegen das andere Kupplungsteil deformiert ist, wobei der Abschnitt (52) das elastische Teil (24) in die Auskehlung (44) biegt.

2. Fahrzeuglenksäule nach Anspruch 1, **gekennzeichnet dadurch, dass** die zwei Kupplungsteile (26, 28) in der Form eines äußeren Rohrs (26), das eine Bohrung (30) mit einem nicht-kreisförmigen Querschnitt definiert, bzw. einem koaxialen inneren Schaft (28) gebildet sind, welches in der Bohrung (30) des äußeren Rohrs (26) gleitfähig angeordnet ist.

3. Fahrzeuglenksäule nach Anspruch 2, **gekennzeichnet dadurch, dass** das elastische Teil (24) um den inneren Schaft (28) herum liegt, und das äußere Rohr (26) um das elastische Teil (24) herum liegt.

4. Fahrzeuglenksäule nach Anspruch 3, **gekennzeichnet dadurch, dass** das Gleitteil (50) in die Bohrung (30) des äußeren Rohrs (26) hinein und um das elastische Teil (24) herum passt, welches an dem inneren Schaft (28) befestigt und zwischen das Gleitteil (50) und den inneren Schaft (28) eingespannt ist, um das Gleitteil (50) in dem Eingriff mit dem äußeren Rohr (26) vorzuspannen.

5. Fahrzeuglenksäule nach Anspruch 4, **gekennzeichnet dadurch, dass** der innere Schaft (28) einen Kolben (42) hat, der in der Bohrung (30) liegt, wobei der Kolben (42) einen nicht-kreisförmigen Querschnitt ähnlich dem Querschnittsprofil der Bohrung (30) des äußeren Rohrs (26) hat.

6. Fahrzeuglenksäule nach Anspruch 5, **gekennzeichnet dadurch, dass** die Auskehlung in dem Kolben (42) des inneren Schafts (28) ausgebildet ist.

7. Fahrzeuglenksäule nach Anspruch 6, **gekennzeichnet dadurch, dass** der innere Schaft (28) ein Zwischenteil (46) in Nachbarschaft zu dem Kolben (42) hat, und in der Bohrung (30) liegt, wobei das Zwischenteil (46) eine Schulter definiert.

8. Fahrzeuglenksäule nach Anspruch 7, **gekennzeichnet dadurch, dass** das elastische Teil (24) den Kolben (42) umgibt.

9. Fahrzeuglenksäule nach Anspruch 8, **gekennzeichnet dadurch, dass** das elastische Teil (24) zwischen dem Gleitteil (50) und dem Kolben (42) in einer Anschlagbeziehung zu der Schulter des Zwischenteils (46) liegt.

10. Fahrzeuglenksäule nach Anspruch 9, **gekennzeichnet dadurch, dass** das Gleitteil (50) über das Zwischenteil (46) hinaus und um es herum geht.

11. Fahrzeuglenksäule nach Anspruch 10, **gekennzeichnet dadurch, dass** das Zwischenteil (46) und das Gleitteil (50) zwischen sich und um das Zwischenteil (46) herum einen Raum (58) definieren, welcher eine Winkelbewegung des äußeren Rohrs (26) und des inneren Schafts (28) relativ zueinander innerhalb eines vorbestimmten, begrenzten Winkelbereichs zulassen.

12. Fahrzeuglenksäule nach Anspruch 11, **gekennzeichnet dadurch, dass** das Zwischenteil (46) mit dem Gleitteil (50) in mechanischen Kontakt kommt, um eine Winkelbewegung des äußeren Rohrs (26) und des inneren Schafts (24) relativ zueinander über den vorbestimmten, begrenzten Winkelbereich hinaus zu verhindern.

13. Fahrzeuglenksäule nach Anspruch 12, **gekennzeichnet dadurch, dass** das Gleitteil (50) ein inneres Ende in Nachbarschaft zu dem Kolben und ein äußeres Ende hat, und das äußere Rohr ein Ende hat, das über das äußere Ende des Gleitteils (50) hinausragt und über es gebogen ist.

14. Fahrzeuglenksäule nach Anspruch 13, **gekennzeichnet dadurch, dass** das Gleitteil (50) auf dem äußeren Rohr (26) gleitet, um eine Bewegung des inneren Schafts (28) relativ zum äußeren Rohr (26) zuzulassen, wenn eine Kraft, welche die zwei Abschnitte der Lenksäule gegeneinander zu bewegen versucht, einen vorbestimmten Wert übersteigt.

15. Fahrzeuglenksäule mit einer Kupplung (20) zwischen zwei Abschnitten (16, 18) der Lenksäule, wobei die Kupplung (20) aus zwei Kupplungsteilen (26, 74), die relativ zueinander gleitfähig sind, einem Gleitteil (78), das in Kontakt mit einem der zwei Kupplungsteilen (26, 74) steht, und einem elastischen Teil (72) besteht, welches dem Gleitteil (78) zugeordnet ist, wobei in einem der zwei Kupplungsteile (26, 74) eine Auskehlung ausgebildet ist,
**gekennzeichnet dadurch, dass**
das Gleitstück (78) in Kontakt ist mit einem der zwei Kupplungsteile (26, 74) und einen Abschnitt (82) hat, der nach innen in einen Eingriff mit der Auskehlung deformiert ist, das elastische Teil (72) das Gleitteil (78) umgibt, und ein Kragen (80) vorgesehen ist zwischen dem elastischen Teil (72) und dem anderen der zwei Kupplungsteile (74), wobei der Kragen (80) einen Abschnitt (92) hat, der nach innen gegen einen der zwei Kupplungsteile (26, 74) deformiert ist, um das elastische Teil (72) in den nach innen deformierten Abschnitt des Gleitteils (78) zu biegen.

16. Fahrzeuglenksäule nach Anspruch 15, **gekennzeichnet dadurch, dass** die zwei Kupplungsteile (26, 74) in der Form eines äußeren Rohrs (26), das eine Bohrung (30) mit einem nicht-kreisförmigen Querschnitt definiert, bzw. einem koaxialen inneren Schaft (74) gebildet sind, welches in der Bohrung (30) des äußeren Rohrs (74) gleitfähig angeordnet ist.

17. Fahrzeuglenksäule nach Anspruch 16, **gekennzeichnet dadurch, dass** eine Auskehlung in dem inneren Schaft (74) ausgebildet ist.

18. Fahrzeuglenksäule nach Anspruch 17, **gekennzeichnet dadurch, dass** der innere Schaft (74) ein Zwischenteil (86) an einem seiner Enden hat.

19. Fahrzeuglenksäule nach einem der Ansprüche 16 - 18, **gekennzeichnet dadurch, dass** der Kragen (80) ein äußeres axiales Ende (94) und ein inneres axiales Ende hat, das nach innen gerichtet in der Bohrung (30) des äußeren Rohrs (26) weiter als sein äußeres axiales Ende liegt, und das äußere axiale Ende (94) des Kragens (80) über ein Ende des äußeren Rohrs (26) hinausgeht und über es gebogen ist.

20. Fahrzeuglenksäule nach einem der Ansprüche 16 - 19, **gekennzeichnet dadurch, dass** der nach innen deformierte Abschnitt (82) des Gleitteils (78) sich von der Auskehlung löst, um eine Bewegung des inneren Schafts (74) relativ zu dem äußeren Rohr (26) zuzulassen, wenn eine Kraft, welche die zwei Abschnitte (16, 18) der Lenksäule zueinander zu bewegen versucht, einen vorbestimmten Wert übersteigt.

21. Fahrzeuglenksäule nach Anspruch 18, **gekennzeichnet dadurch, dass** das Zwischenteil (86) und das äußere Rohr (26) zwischen sich einen Raum (58) definieren, welcher eine Winkelbewegung des äußeren Rohrs (26) und des inneren Schafts (74) relativ zueinander innerhalb eines vorbestimmten, begrenzten Winkelbereichs zuläßt.

22. Fahrzeuglenksäule nach Anspruch 21, **gekennzeichnet dadurch, dass** das Zwischenteil (86) mit dem äußeren Rohr (26) in mechanischen Kontakt kommt, um eine Winkelbewegung des äußeren Rohrs (26) und des inneren Schafts (74) relativ zueinander über den vorbestimmten, begrenzten Winkelbereich hinaus zu verhindern.

23. Fahrzeuglenksäule nach irgendeinem der Ansprüche 16 - 22, wobei die Kupplung (70) einen Kragen enthält, der in die Bohrung (30) des äußeren Rohrs (26) passt, in fester Beziehung zu dem äußeren Rohr (26) gehalten wird und das elastische Teil (72) umgibt, und das Gleitteil (78) an dem äußeren Rohr (26) verankert ist.

## Revendications

1. Colonne de direction de véhicule comprenant un embrayage (20) entre deux portions (16, 18) de la colonne de direction, l'embrayage précité (20) incorpore deux parties de couplage (26, 28) pouvant glisser l'une relativement à l'autre, un élément de glissement (50) en contact avec l'une desdites deux parties de couplage (26, 28) ainsi qu'un élément élastique (24) disposé entre ledit élément de glissement (50) et l'autre desdites parties de couplage (26, 28) pour solliciter ledit élément de glissement (50) en prise avec l'une desdites deux parties de couplage (26, 28), où un évidement est ménagé dans ladite autre partie de couplage, **caractérisée en ce que** l'élément de glissement (50) possède une portion (52) déformée vers l'intérieur vers ladite autre partie de couplage où ladite portion (52) fait fléchir l'élément élastique (24) dans ledit évidement (44).

2. Colonne de direction de véhicule selon la revendication 1, **caractérisée en ce que** les deux parties de couplage (26, 28) se présentent sous la forme d'un tube externe (26) définissant un perçage (30) d'une section transversale non circulaire et d'un arbre interne coaxial (28), respectivement, ledit arbre interne (28) étant agencé d'une manière coulissante dans le perçage (30) du tube externe (26).

3. Colonne de direction de véhicule selon la revendication 2, **caractérisée en ce que** l'élément élastique (24) est disposé autour de l'arbre interne (28), et le tube externe (26) est disposé autour de l'élément élastique (24).

4. Colonne de direction de véhicule selon la revendication 3, **caractérisée en ce que** l'élément de glissement (50) s'adapte dans ledit perçage (30) dudit tube externe (26) et autour dudit élément élastique (24) qui est fixé audit arbre interne (28) et qui est contraint entre ledit élément de glissement (50) et ledit arbre interne (28) afin de solliciter l'élément de glissement (50) en prise avec le tube externe (26).

5. Colonne de direction de véhicule selon la revendication 4, **caractérisée en ce que** l'arbre interne (28) possède un piston (42) disposé dans ledit perçage (30), ledit piston (42) ayant un profil en section transversale non circulaire similaire à un profil en section transversale du perçage (30) du tube externe (26).

6. Colonne de direction de véhicule selon la revendication 5, **caractérisée en ce que** l'évidement est ménagé dans le piston (42) de l'arbre interne (28).

7. Colonne de direction de véhicule selon la revendication 6, **caractérisée en ce que** l'arbre interne (28) présente un élément intermédiaire (46) adjacent audit piston (42) et disposé dans le perçage (30), où ledit élément intermédiaire (46) définit un épaulement.

8. Colonne de direction de véhicule selon la revendication 7, **caractérisée en ce que** l'élément élastique (24). entoure le piston (42).

9. Colonne de direction de véhicule selon la revendication 8, **caractérisée en ce que** l'élément élastique (24) est interposé entre l'élément de glissement (50) et le piston (42) en une relation de butée contre l'épaulement dudit élément intermédiaire (46).

10. Colonne de direction de véhicule selon la revendication 9, **caractérisée en ce que** ledit élément de glissement (50) s'étend sur et autour dudit élément intermédiaire (46).

11. Colonne de direction de véhicule selon la revendication 10, **caractérisée en ce que** ledit élément intermédiaire (46) et ledit élément de glissement (50) définissent entre eux un espace (58) autour dudit élément intermédiaire (46) qui permet un mouvement angulaire dudit tube externe (26) et dudit arbre interne (28) l'un relativement à l'autre dans une plage d'angles limitée prédéterminée.

12. Colonne de direction de véhicule selon la revendication 11, **caractérisée en ce que** ledit élément intermédiaire (46) vient en contact mécanique avec ledit élément de glissement (50) pour empêcher un mouvement angulaire dudit tube externe (26) et dudit arbre interne (28) l'un relativement à l'autre au-delà de ladite plage d'angles limitée prédéterminée.

13. Colonne de direction de véhicule selon la revendication 12, **caractérisée en ce que** ledit élément de glissement (50) présente une extrémité interne adjacente audit piston et une extrémité externe, et ledit tube externe présente une extrémité faisant saillie au-delà et rabattue sur ladite extrémité externe dudit élément de glissement (50).

14. Colonne de direction de véhicule selon la revendication 13, **caractérisée en ce que** ledit élément de glissement (50) glisse sur ledit tube externe (26) pour permettre un déplacement dudit arbre interne (28) relativement audit tube externe (26) lorsqu'une force tendant à déplacer les deux portions de la colonne de direction l'une vers l'autre dépasse une valeur prédéterminée.

15. Colonne de direction de véhicule comprenant un embrayage (70) entre deux portions (16, 18) de la colonne de direction, l'embrayage précité (70) incorpore deux parties de couplage (26, 74) aptes à coulisser l'une relativement à l'autre, un élément de glissement (78) en contact avec l'une desdites deux parties de couplage (26, 76) ainsi qu'un élément élastique (72) associé audit élément de glissement (78), où un évidement est ménagé dans l'une desdites deux parties de couplage (26, 74), **caractérisée en ce que** l'élément de glissement (78) est en contact avec l'une desdites deux parties de couplage (26, 74) et présente une portion (82) déformée vers l'intérieur en prise avec ledit évidement, l'élément élastique (72) entoure l'élément de glissement (78), et un collier (80) est prévu entre l'élément élastique (72) et l'autre des deux parties de couplage (74), où ledit collier (80) présente une portion (92) déformée vers l'intérieur, vers l'une desdites deux parties de couplage (36, 74) pour faire fléchir l'élément élastique (72) dans ladite portion déformée vers l'intérieur dudit élément de glissement (78).

16. Colonne de direction de véhicule selon la revendication 15, **caractérisée en ce que** les deux parties de couplage (26, 74) se présentent sous la forme d'un tube externe (26) définissant un perçage (30) d'une section transversale non circulaire et d'un arbre interne coaxial (74), respectivement, ledit arbre interne (74) étant agencé d'une manière coulissante dans le perçage (30) du tube externe (26).

17. Colonne de direction de véhicule selon la revendication 16, **caractérisée en ce qu'**un évidement est ménagé dans ledit arbre interne (74).

18. Colonne de direction de véhicule selon la revendication 17, **caractérisée en ce que** ledit arbre interne (74) présente un élément intermédiaire (86) à une extrémité de celui-ci.

19. Colonne de direction de véhicule selon l'une des revendications 16 à 18, **caractérisée en ce que** ledit collier (80) présente une extrémité axiale externe (94) et une extrémité axiale interne positionnée vers l'intérieur dans ledit perçage (30) dudit tube externe (26) plus loin que ladite extrémité axiale externe de celui-ci, et ladite extrémité axiale externe (94) dudit collier (80) fait saillie au-delà et est rabattue sur une extrémité dudit tube externe (26).

20. Colonne de direction de véhicule selon l'une des revendications 16 à 19, **caractérisée en ce que** ladite portion déformée vers l'intérieur (82) dudit élément de glissement (78) sort dudit évidement pour permettre un déplacement dudit arbre interne (74) relativement audit tube externe (26) lorsqu'une force tendant à déplacer les deux portions (16, 18) de la colonne de direction l'une vers l'autre dépasse une valeur prédéterminée.

21. Colonne de direction de véhicule selon la revendication 18, **caractérisée en ce que** ledit élément intermédiaire (86) et ledit tube externe (26) définissent entre eux un espace qui permet un mouvement angulaire dudit tube externe (26) et dudit arbre interne (74) l'un relativement à l'autre dans une plage d'angles limitée prédéterminée.

22. Colonne de direction de véhicule selon la revendication 21, **caractérisée en ce que** ledit élément intermédiaire (86) vient en contact mécanique avec ledit tube externe (26) pour empêcher un mouvement angulaire dudit tube externe (26) et dudit arbre interne (74) l'un relativement à l'autre au-delà de ladite plage d'angles limitée prédéterminée.

23. Colonne de direction de véhicule selon l'une des revendications 16 à 22, où ledit embrayage (70) comprend un collier s'adaptant dans ledit perçage (30) dudit tube externe (26) maintenu en une relation fixe audit tube externe (26) et entourant ledit élément élastique (72), et ledit élément de glissement (78) est ancré audit tube externe (26).
